# EUROPÄISCHE PATENTSCHRIFT

(11) **EP 3 099 968 B1**
(45) Veröffentlichungstag und Bekanntmachung des Hinweises auf die Patenterteilung: **26.12.2018**
(21) Anmeldenummer: 15702961.2
(22) Anmeldetag: 14.01.2015
(51) Int. Cl.: F16L 55/40, G01B 7/16, B08B 9/055

(54) **MOLCH UND MOLCHSCHEIBE FÜR EINEN MOLCH**
PIG, AND DISC FOR A PIG
RACLEUR ET DISQUE POUR RACLEUR

(30) Priorität: 29.01.2014 DE 102014001001
(43) Veröffentlichungstag der Anmeldung: 07.12.2016
(73) Patentinhaber: Rosen Swiss AG, 6370 Stans (CH)
(72) Erfinder: LARINK, Dirk, 48531 Norhorn (DE); MÖNSTER, Tilmann, 49838 Lengerich (DE); ROSENBLECK-SCHMIDT, Holger, 48531 Nordhorn (DE)
(74) Vertreter: Weeg, Thomas
(86) Internationale Anmeldenummer: PCT/EP2015/000051
(87) Internationale Veröffentlichungsnummer: WO 2015/113734

(56) Entgegenhaltungen:
- WO-A1-2013/088427
- WO-A2-00/26608
- US-A- 4 227 309
- US-A1- 2003 029 256
- US-A1- 2009 249 885

## Beschreibung

Die vorliegende Erfindung betrifft einen Molch zur Inspektion und/oder Reinigung von Rohrleitungen, die insbesondere Öl, Gas oder Wasser transportieren, wobei der Molch wenigstens ein biegsames Kunststoffelement aufweist, welches an einem vorzugsweise als Molchkörper ausgebildeten Molchelement gehalten ist. Des Weiteren betrifft die vorliegende Erfindung eine Molchscheibe für einen in einer Rohrleitung verwendbaren Molch, umfassend einen Scheibenkörper mit einem inneren Befestigungsbereich zur Festlegung der Molchscheibe an einem Molchkörper sowie einem bezüglich einer Mittelachse sich nach außen an den inneren Befestigungsbereich anschließenden Außenbereich, der wenigstens teilweise in Kontakt mit einer Innenseite der Rohrleitung gelangen kann.

Zum Schutz von Inspektions- oder Reinigungsmolchen ist es in der Praxis üblich, die Pipelines zuvor mit einem relativ kostengünstigen Molch zu durchfahren, der eine Molchscheibe aus Aluminium aufweist. Diese Molchscheibe ist an dem Körper des Molches befestigt. Der Außendurchmesser dieser auch "Gougingplate" bezeichneten Molchscheibe entspricht in etwa dem Durchmesser eines Sensorkranzes eines zu verwendenden Inspektionsmolches. Durch eine Beschädigung beziehungsweise die Zerstörung der Gougingplate werden strukturelle Unregelmäßigkeiten in der Pipeline aufgezeigt. Solche Unregelmäßigkeiten können beispielsweise Ablagerungen oder Beulen in der Rohrleitung, in die Rohrleitung hineinragende Anschlüsse beispielsweise unzulässiger Entnahmestellen oder rostende und aufplatzende Schweißverbindungen sein.

Ein Problem bei der Erkennung dieser strukturellen Unregelmäßigkeiten stellt die mangelnde Ortsauflösung dar. So ist durch die Verwendung der Gougingplate nicht genau bekannt, wo sich in der Rohrleitung sowohl in Richtung deren Längserstreckung (z-Richtung) und bei welches Uhrzeit (xy-Ebene) die potentiellen Gefahren für den Inspektionsmolch befinden. Zudem besteht eine Gefahr darin, dass aufgrund einer vorherigen Beschädigung beziehungsweise teilweisen Zerstörung der Gougingplate zeitlich hintereinander auftretende Hindernisse nicht richtig gedeutet werden können.

Eine weitere Möglichkeit, die in einer Rohrleitung vorhandenen strukturellen Unregelmäßigkeiten zu identifizieren, liegt in dem Einsatz von Inspektionsmolchen, die auf mechanischem Weg, d.h. insbesondere über die Auslenkung einer Vielzahl von beweglichen Armen, den "free span" oder die Innengeometrie von Rohrleitungen messen können. Diese Molche sind jedoch als Inspektionsmolche mechanisch bereits relativ komplex aufgebaut und aufgrund ihres Preises vor Kontakt mit zu großen Unregelmäßigkeiten, die den Molch beschädigen können, zu schützen. Daher werden im Vorfeld einer solchen Inspektion wiederum Molche mit Gougingplates eingesetzt.

Die WO 2013/088427 A1 offenbart zwei verschiedene Arten der Messung der Innengeometrie. Einerseits werden in kronblattartigen Armen kapazitive Deformationssensoren, die sich in Längsrichtung der Arme erstrecken, gezeigt. Andererseits werden auf dem Körper eines Schaummolchs endseitig quer zu dessen Längserstreckung angeordnete, kapazitive Stauchungssensoren beschrieben, die ein Dielektrikum auf Silikon-Basis verwenden.

Weiterhin ist aus der US 4 227 309 A die Verwendung mehrerer zwischen zwei Scheiben eingesetzten Dehnungsmesstreifen bekannt, die bei ungleichmäßiger und nicht zu großer Auslenkung ein Differenzsignal in einer Brückenschaltung erzeugen.

Es besteht daher Bedarf, einen kostengünstigen Molch zur Inspektion von Pipelines insbesondere mit den beschriebenen strukturellen Unregelmäßigkeiten bereit zu stellen.
Die Aufgabe wird gelöst durch einen Molch gemäß Anspruch 1 sowie durch eine Molchscheibe gemäß Anspruch 12 sowie schließlich durch einen Molch gemäß Anspruch 23. Vorteilhafte Ausgestaltungen der Erfindung sind in den Unteransprüchen sowie dieser Beschreibung dargestellt.
Erfindungsgemäß zeichnet sich ein Molch mit wenigstens einem biegsamen Kunststoffelement, welches an einem Molchelement gehalten ist, dadurch aus, dass das Kunststoffelement von dem Molchelement aus betrachtet zumindest einen sich in Längsrichtung des Kunststoffelements erstreckenden elektromechanischen Wandler zur Erkennung und/oder Ausübung einer Formänderung des Kunststoffelements aufweist. Alternativ oder ergänzend kann der elektromechanische Wandler auch als Generator zur Energieerzeugung in der Pipeline verwendet werden. Durch den Verzicht auf komplexe Hebelmechaniken wird die Steifigkeit und dem Kunststoffelement innewohnende Flexibilität, d.h. seine Biegsamkeit in eine Richtung quer zur Längsrichtung des Kunststoffelements ausgenutzt, um mittels des elektromechanischen Wandlers Formänderungen des Kunststoffelements durchzuführen oder zu erkennen. Hierbei erfährt oder erzwingt der elektromechanische Wandler eine Formveränderung, die der Änderung der Form des Kunststoffelements entspricht bzw. mit dieser einhergeht. Im Extremfall kann der elektromechanische Wandler das Kunststoffelement zu wesentlichen Teilen ausbilden.

Ein solcher erfindungsgemäßer Molch ist günstiger in der Herstellung, da die Herstellung des Kunststoffelements in der Regel günstiger ist als die Herstellung von metallischen Teilen. Außerdem ist Integration eines elektromechanischen Wandlers in Form eines Sensors oder Aktors, sei es innerhalb oder zumindest teilweise außen an dem Kunststoffelement einfacher möglich ist. Der Wandler ist genauso biegsam wie das Kunststoffelement und zwar insbesondere in Richtung quer zu seiner Längserstreckung. Die Energieversorgung des elektromechanischen Wandlers kann wie bei herkömmlichen Sensoren auch entweder lokal dicht am Sensor und beispielsweise im Kunststoffelement integriert sein, sie kann auch verkabelt an einem Molchelement oder einem weiteren Teil des Molches lokalisiert werden.

Typischerweise ist das Kunststoffelement elastisch ausgebildet, d.h. es kann nach Formänderungen, die aufgrund von inneren Zwängen (des Wandlers) oder durch Änderung der Rohrleitungsgeometrie bewirkt wurden, in seine Ausgangslage zurückkehren.

Unter einer Erstreckung des Wandlers in Längsrichtung wird ausgehend von der Befestigung eine Erstreckung über zumindest 30% entlang der Ausdehnung des Kunststoffelements verstanden. Vorzugsweise ist eine stärkere Formänderung verbessert ausüb- oder detektierbar, wenn zumindest 50% des Kunststoffelements in Längsrichtung mit einem Wandler versehen sind. Es können auch mehrere Wandler in dem Kunststoffelement vorgesehen werden, sei es in Längsrichtung nacheinander oder parallel zueinander verlaufend.

Vorteilhafterweise verbindet das Kunststoffelement das Molchelement mit einem weiteren Molchteil, beispielsweise einem Messkopf oder einem weiteren Molchsegment, d.h. einen in Längsrichtung des Molches von einem ersten Molchteil beabstandet und insbesondere gelenkig angebundenen zweiten Molchteil. Bevorzugt handelt es sich bei dem weiteren Molchteil allerdings um ein von einer Längsmittelachse des Molches radial nach außen versetztes Teil, welches beispielsweise dicht an einer Innenwand der Rohrleitung zu positionieren ist.

Das Kunststoffelement kann alternativ oder ergänzend jedoch auch zur Verbindung von mehreren Molchsegmenten verwendet werden, was den Vorteil mit sich bringt, entsprechende Relativpositionen der Segmente gut über den Wandler detektieren zu können oder bewirken zu können und entsprechend eine Ausrichtung des Molches beispielsweise zum Einfahren in Rohrleitungsverzweigungen zu ermöglichen.

Entsprechend ist der Wandler insbesondere zur Erzeugung einer Kraft quer zu seiner Längserstreckung ausgebildet, um eine Relativposition des Molchelements zum Molchteil zu ändern. Zumindest ist der Wandler flach und längsgestreckt stab- oder auch plattenförmig ausgebildet. Vorzugsweise weist der Molch eine Mehrzahl von Wandlern in und/oder an dem Kunststoffelement auf. Er kann eine Mehrzahl von Kunststoffelementen mit einem und/oder mehreren Wandlern aufweisen. So sind in Umfangsrichtung um den Molch herum Formänderungen nachvollziehbar mittels entsprechend als Wandler ausgebildeter Sensoren. Ebenfalls ist es möglich, Formänderungen in Umfangsrichtung um die Längsachse des Molches herum und in Richtung der Rohrleitungsinnenwand durchzuführen. Ebenfalls sind Formänderungen und Messungen von Formänderungen relativ zwischen zwei Molchsegmenten möglich.

Um die Anlage eines Sensorkopfes oder eine Messung der Innengeometrie des Rohres zu verbessern, ist der Wandler vorzugsweise zur Verstärkung einer von dem Molch auf eine Innenwand der Rohrleitung ausübbaren Kraft ausgebildet. Alternativ kann er eine solche Kraft erst erzeugen.

Vorzugsweise ist es möglich, einen als Aktor betriebenen Wandler zu Zeiten, in denen der Betrieb des Wandlers als Aktor nicht benötigt wird, als Sensor zu verwenden. Hierfür ist lediglich die Ansteuerelektronik anzupassen. Entsprechendes gilt auch für einen als Generator betriebenen Wandler, der im Aufbau z.B. hinsichtlich Elektroden und Dielektrikum identisch zu den als Sensoren oder Aktoren betriebenen Wandlers sein kann. Auch kann der Molch in oder an einem oder mehreren Kunststoffelementen unterschiedlich ausgebildete Wandler aufweisen, d.h. wenigstens einen Wandler, der als Aktor zur Kraftausübung ausgebildet ist und wenigsten einen weiteren Wandler, der als Sensor ausgebildet ist.

Die vorbeschriebenen Vorteile werden insbesondere dann deutlich, wenn das Kunststoffelement und der Wandler Elastizitätswerte haben, die nicht mehr als 25% voneinander abweichen.

Erfindungsgemäß weist der Wandler ein von Elektroden eingefasstes Dielektrikum auf was eine einfache Herstellung des Wandlers ermöglicht. Gleichzeitig ist das Dielektrikum auf Kunststoffbasis ausgebildet und bedient sich somit in herkömmlicher Weise im Pipelineinspektionsbereich verwendeter Kunststoffe bzw. kann an diese angepasst werden.

Erfindungsgemäß ist das Dielektrikum auf Basis eines Elastomers hergestellt, bei dem es sich um ein Polyurethan handelt. Polyurethane insbesondere im Bereich von Shore-Härten A zwischen 50 und 100 weisen sehr gute Dehnungs- und Elastizitätseigenschaften, geringe Materialkosten und bezüglich etwaiger dielektrischer Ausbildungen eine energieeffiziente Leistungsaufnahme und ein schnelles Ansprechverhalten sowie eine hohe Zuverlässigkeit auf. Auch kann ein zumindest gewichtsneutraler Betrieb erreicht werden.
Auch die Elektroden können auf Basis eines Kunststoffs, insbesondere eines Polyurethans, hergestellt werden. Für Elektroden geeignete Materialien können auf Basis von Ruß, Graphit, Kohlenstoffnanoröhren oder -röhrchen, metallischen Partikeln oder leitfähigen Elastomerkompositen hergestellt werden.

Diese Vorteile kommen einem Wandler zu, der von einem Körper aus Polyurethan eingefasst ist und/oder einem Molch zu, bei dem das Kunststoffelement wenigstens überwiegend aus bzw. auf Basis eines Polyurethan(s) ausgebildet ist.

Vorzugsweise ist eine Schicht des Wandlers zumindest teilweise auf Basis eines Ruß- oder Bariumtitanat-haltigen Elastomers ausgebildet. Die Dielektrizitätszahl des Dielektrikums kann weiterhin durch die Verwendung geeigneter Materialien erhöht werden. Geeignete Materialien sind insbesondere leitfähige (z.B. Ruß- oder Graphithaltige) oder hoch-polarisierende organische oder anorganische Füllstoffe (insb. Bariumtitanat). Hoch-polarisierend sind vorliegend Materialien, deren Dielektrizitätszahl größer 50 ist. Entsprechende ausgebildete Wandler, insbesondere als Sensoren, können bei nur geringem Aufwand selbst hergestellt werden.

Vorzugsweise kann eine Elektrode des Wandlers zumindest teilweise auch auf Basis eines Kohlenstoffnanoröhrchen-, Graphit-, Ruß-, oder Metallpulver-haltigen Materials ausgebildet sein, entsprechende Materialien sind gut in Polyurethan-Kunststoff integrierbar.

Ein Sensor oder Aktor mit einem Dielektrikum auf Basis eines insbesondere die vorbezeichneten Füllstoffe umfassenden Polyurethans weist im Vergleich zu anderen unmodifizierten Elastomeren (z.B. Silikon) eine hohe Dielektrizitätszahl auf, so dass bei gleichbleibenden Bedingungen die für eine Kapazität von beispielsweise 1 nF notwendige Sensorfläche auf 10 cm² und somit in einem praktikablen Bereich reduziert werden kann. Alternativ ist die Schichtdicke entsprechend zu erhöhen. Entsprechend sind die Schichten des Sensors einfacher handhabbar und können stärker belastet werden.

Vorzugsweise ist der Wandler gemäß einer weiteren Ausführungsform der Erfindung dergestalt tordierbar, dass er in axialer Richtung und in Umfangsrichtung biegsam ist. In Umfangsrichtung bedeutet hierbei um die Längsrichtung des Kunststoffelements herum. Dies kann beispielsweise durch zwei parallel verlaufende Wandler bewirkt werden, die in unterschiedliche Richtungen Kräfte auf das Kunststoffelement und damit sich selbst aufbringen.

Generell ist ein Molch mit einem Kunststoffelement, welches einen elektromechanischen Wandler aufweist, vorteilhaft ausgebildet aufgrund des geringen Materialaufwands, des einfachen Aufbaus sowie einer hohen und guten Bogengängigkeit. Insbesondere die hohe Flexibilität der möglichen Kunststoffe sowie die Integration der Messvorrichtung in diese Kunststoffelemente tragen für kleine Ausbildungen des Molches Sorge.

Als flexible Sensoren können auf Basis von Elastomeren aufgebaute Sensoren Anwendung finden, allerdings sind auch andere leitfähige Kunststoffe, z.B. mit Leitruß oder ähnlichem gefüllte Elastomere möglich. Entsprechend sind einerseits Kapazitäts-, Widerstands- oder Spannungsänderungen (insbesondere bei piezoelektrischen Materialien) detektierbar und von einer zugehörigen Messelektronik entweder speicher- oder direkt auswertbar. Neben dem Dielektrikum weist der Sensor dann wie auch etwaige Aktoren zumindest zwei Elektrodenschichten auf. Bei drei oder mehr Schichten kann der Wandler zwei oder mehr Schichten des Dielektrikums aufweisen.

Die Verwendung mehrerer Sensoren kann darüber hinaus zu Differenzmessungen genutzt werden, bei denen eine Subtraktion der Sensorsignale erfolgt und somit etwaige Temperatur- oder Druck- sowie andere äußere Effekte auf die Sensoren kompensiert werden können.

Erfindungsgemäß ist es bei einer weiteren Lösung der eingangs gestellten Aufgabe vorgesehen, dass bei einer Molchscheibe für einen in einer Rohrleitung verwendbaren Molch und zur Erkennung von Änderungen des freien Innenquerschnitts der Rohrleitung, umfassend einen Scheibenkörper mit einem inneren Befestigungsbereich zur Festlegung der Molchscheibe an einem Molchkörper sowie einen bezüglich einer Mittelachse sich weiter nach außen an den Befestigungsbereich anschließenden Außenbereich, der wenigstens teilweise in Kontakt mit einer Innenseite der Rohrleitung gelangen kann, zumindest der elastische Außenbereich wenigstens einen elektromechanischen Sensor zur Erkennung der Änderungen (des freien Innenquerschnitts der Rohrleitung) aufweist. Formänderungen des elastischen Außenbereiches können von dem elektromechanischen Sensor registriert werden. Hierfür können Änderungen des Widerstandes des Sensors oder bevorzugt Änderungen der Kapazität des Sensors von einem zugehörigen Messsystem bzw. einer Messelektronik registriert werden. Aufgrund der Elastizität zumindest des Außenbereichs kann die Molchscheibe nach Überfahren der strukturellen Unregelmäßigkeit wieder in die vorherige Form zurückschnellen oder -federn, so dass anschließend eine an derselben Uhrzeit stromabwärts in der Rohrleitung vorhandene Veränderung des freien Innenquerschnitts erfasst werden kann. Durch strukturelle Unregelmäßigkeiten innerhalb der Pipeline werden somit reversible Formänderungen der Molchscheibe hervorgerufen, die mittels des elektromechanischen Sensors erfasst werden. Falls die Molchscheibe unter Vorspannung oder Vordehnung in die Rohrleitung eingebracht wird, können nicht nur Verjüngungen sondern auch Vergrößerungen des freien Innenquerschnitts der Rohrleitung von dem Sensor registriert werden. Die Molchscheibe kann sich bei Vergrößerungen des Querschnitts ausdehnen und somit anders als bisherige Gougingplates beispielsweise Abrasionen von Beschichtungen oder Beulen nach außen erkennen. Die hierdurch verursachte Relaxation des Scheibensegmentes oder des Scheibenkörpers kann mit dem elektromechanischen Sensor registriert werden und führt beispielsweise zu einer Kapazitäts-, Widerstands- oder Spannungsänderung, die von der Messelektronik registriert wird.

Bei der Molchscheibe kann es sich mithin um ein biegsames Kunststoffelement gemäß Anspruch 1 handeln, entsprechend kann das Molchelement als Molchkörper zur Festlegung der Molchscheibe ausgebildet sein.

Zum Schutz der Molchscheibe kann diese endseitig entlang ihres Umfangs einen Kantenschutz aufweisen, über den die Molchscheibe eine definierte Anlage an der Rohrinnenwand erreicht. Dieser Kantenschutz kann vorzugsweise aus einem harten Metall oder einem keramischen Material bestehen, z.B. aus Zirkoniumdioxid. Die Form des Kantenschutzes kann mit dem Ziel einer verbesserten Abtastung der Innenwand der Rohrleitung zumindest teilweise eine rundliche oder auch spitze Form aufweisen.

Es versteht sich, dass die vorzugsweise als Kapazitäts- oder Widerstandsänderungen des Sensors erfassbaren Sensorwerte durch ein geeignetes Mess- bzw. Erfassungssystem elektrisch oder elektronisch erfasst, gespeichert und gegebenenfalls auch schon ausgewertet werden können. Dieses Mess- und/oder Erfassungssystem kann Teil der Molchscheibe sein, es kann allerdings zur Vermeidung von zu hohen Kosten bei dem Austausch einer verschlissenen Molchscheibe vorteilhaft sein, die wesentlichen Teile des Erfassungssystem einem zugehörigen Molch zuzuordnen und beispielweise in dem Körper des Molches unterzubringen. Der Molchscheibe ist dann ein Mess- und/oder Erfassungssystem zugeordnet, welches Mittel zur Erkennung etwaiger Änderungen des Widerstandes beziehungsweise der Kapazität des elektromechanischen Sensors aufweist. Auch bei einem Betrieb des Wandlers als Aktor ist eine entsprechende Ansteuerelektronik auf dem Molch vorhanden. Diese umfasst Mittel zur Spannungsversorgung sowie zugehörige Steuer- und Speichermittel. Analog wird bei Verwendung des Wandlers als Generator die zugehörige Elektronik Mittel zur Abnahme der durch die auf den Wandler einwirkenden mechanischen Kräfte erzeugten Spannung aufweisen. Die aus dem Wandler entnommene Energie kann dann verbraucht oder über Speichermittel gespeichert werden.

Insbesondere ist der Sensor dergestalt biegsam ausgebildet, dass er durch Querschnittsänderungen der Rohrleitung verursachte Formänderungen der Molchscheibe mit vollziehen kann. Hierzu kann der Sensor entweder an der Außenseite der Molchscheibe angeordnet sein, in diese integriert sein oder die Molchscheibe zumindest teilweise mit ausbilden. Nach Überquerung des Hindernisses beziehungsweise der Unregelmäßigkeit in der Rohrleitung kann die an einem Molch befestigte Molchscheibe mit dem Sensor zusammen in die Form zurückkehren, die dem Ausgangszustand vor der strukturellen Unregelmäßigkeit entspricht.

Bei der Mittelachse handelt es sich um eine Achse, die durch das Zentrum der typischerweise kreisrunden Molchscheibe hindurchführt und die senkrecht auf der Ebene der flach ausgebreiteten Molchscheibe steht. Falls die Molchscheibe in einem unbelasteten Zustand nicht als flache Scheibe ausgebildet ist, sondern beispielsweise entgegen einer anzunehmenden Fahrtrichtung nach hinten gebogene Bereiche aufweist, so entspricht die Längsachse der Molchscheibe der Längsachse des Molches bei eingebautem Zustand der Molchscheibe.

Zur Ausblendung von Temperatureffekten ist es in einer weiteren erfindungsgemäßen Ausbildung vorgesehen, dass der Scheibenkörper in axialer Richtung betrachtet zumindest zwei hintereinander angeordnete und vorzugsweise voneinander beabstandete Sensoren aufweist, die insbesondere in den Scheibenkörper eingebracht oder an der Molchscheibe angeordnet sind. Zur exakten Bestimmung der Auslenkung beziehungsweise Formänderung der Molchscheibe sind die beiden Sensoren dergestalt in einer Erfassungseinrichtung geschaltet, dass eine Differenzmessung der Sensorsignale bzw. eine Subtraktion der Sensorsignale möglich ist. Durch diese werden etwaige Temperatureffekte oder auch andere äußere Einflüsse z.B. aufgrund von Druck auf die Sensoren kompensiert. Anderenfalls sollte für einen Sensor eine Temperaturkalibrierung durchgeführt werden. Bei einer Deformation der Molchscheibe aufgrund einer strukturellen Unregelmäßigkeit, beispielsweise aufgrund einer Einbeulung und einer Verringerung des Innenquerschnitts der Rohrleitung kommt es bei in axialer Richtung hintereinander liegenden Sensoren vorzugsweise einerseits zu einer Dehnung (des in Fahrtrichtung vorderen Sensors) sowie zu einer Stauchung des in Fahrtrichtung dahinter befindlichen Sensors. Sofern es sich um kapazitive Sensoren handelt, führt dies einerseits zu einer Erhöhung der Kapazität, andererseits zu einer Verringerung der Kapazität (hintere Sensor). Die Differenz der beiden Kapazitäten ist somit größer Null. Starke Deformationen des freien Innendruckquerschnitts führen zu hohen Kapazitätsänderungen und geringe Deformation führen zu niedrigeren Kapazitätsänderungen.

In Abhängigkeit der verwendeten Materialien des Sensors können Eichkurven erstellt werden, die in einer Datenbank abgelegt und hinterher zur Auswertung von vorhandenen Läufen in einer Rohrleitung verwendet werden können, um die Querschnittsänderungen quantifizieren zu können. Alternativ kann die Formänderung der Molchscheibe auch direkt aus den Sensordaten ermittelt werden, entweder auf analytischem Weg oder vereinfacht näherungsweise.

Vorzugsweise weist der Scheibenkörper in Umfangsrichtung eine Mehrzahl von voneinander getrennten Segmenten auf, über die eine verbesserte Quantifizierung der Unregelmäßigkeiten ermöglicht wird. Beispielsweise kann die Molchscheibe in Scheibensegmente ähnlich wie Kuchenstücke unterteilt werden, wobei vorzugsweise jedes Scheibensegment zumindest einen insbesondere in dem Molchkörper eingebrachten Sensor aufweist. Hierdurch kann in Umfangsrichtung die Position eines Hindernisses in der Rohrleitung besser bestimmt werden. Insbesondere ist unter zusätzlicher Verwendung eines Lagesensors zur Bestimmung der Ausrichtung des Molches eine Bestimmung in der XY-Ebene in Abhängigkeit von der Feinauflösung der Segmente gut möglich.

In Kombination mit einem Weg- beziehungsweise Zeitaufnehmer können weiterhin auch nacheinander auftretende Hindernisse eindeutig lokalisiert werden. Bei weiterer Verwendung eines Sensors, der die Ausrichtung des Molches in der XY-Ebene bestimmt, können die strukturellen Unregelmäßigkeiten dann entsprechend der Auflösung der Scheibensegmente in allen drei Dimensionen lokalisiert werden. Weitere qualitative Informationen über etwaige strukturelle Unregelmäßigkeiten können dann erfasst werden, wenn der Scheibenkörper in radialer Richtung eine Mehrzahl von zumindest teilweise nacheinander angeordneten Sensoren aufweist.

Erfindungsgemäß handelt es sich bei den Sensoren um Sensoren, die ein von Elektroden eingefasstes Dielektrikum aufweisen und somit auf kapazitiver Ebene messen. Bei Verwendung eines Elastomers als Dielektrikum, erfindungsgemäß eines Polyurethans, zeichnet sich die erfindungsgemäße Molchscheibe durch sehr gute Dehnungs- und Elastizitätseigenschaften, geringe Materialkosten, eine energieeffiziente Leistungsaufnahme und des Weiteren durch schnelles Ansprechverhalten, hohe Zuverlässigkeit und einen annähernd geräuschlosen und gewichtsneutralen Betrieb aus. Alternativ oder ergänzend kann der Sensor ein Material aus der Gruppe Graphit, Graphen, Ruß, Kohlenstoffnanoröhrchen, Metallpulver für die Elektrode sowie Silikon, Polyacryl, Gummi, Fluorkautschuk oder andere Elastomere für das Dielektrikum, ebenfalls wieder mit den vorstehenden Vorteilen, aufweisen. Für das Kunststoffelement, bei dem es sich auch um die Molchscheibe oder ein Molchscheibensegment handeln kann, und/oder Teile des Wandlers sind neben Polyurethan auch andere Elastomere, z.B. ein insbesondere hydrierter Acrylnitrilbutadien-Kautschuk oder ein Fluorelastomer, verwendbar.

Zumindest weist der Sensor als Dielektrikum vorzugsweise zu 80 % ein Polyurethan auf, vorzugsweise jedoch zumindest 95 % und insbesondere zu mindestens 99 %. Anders als beispielsweise Silikonelastomere weist ein Dielektrikum auf Basis eines Polyurethans eine hohe Dielektrizitätszahl auf, so dass bei gleichbleibenden Bedingungen die für eine Kapazität von beispielsweise 1 nF die notwendige Sensorfläche auf 10 cm² reduziert werden kann, beziehungsweise die Schichtdicke auf 300 µm erhöht werden darf. Dieser Vorteil macht sich bei der Minimierung des Sensorsystems und einer einfacheren Verarbeitung bemerkbar, da relativ dünne Filme für das Dielektrikum schwerer handhabbarer.

Die Dielektrizitätszahl und damit die Auflösung des Sensors lässt sich durch das Einbringen von Additiven, insbesondere von Bariumtitanat, weiter erhöhen.

Um auch die Elektrode des Sensors dehnbar zu gestalten, wird für die Elektrode zumindest teilweise eine Schicht eines Ruß- haltigen Elastomers verwendet. Alternativ oder ergänzend kann die Elektrode des Sensors zumindest teilweise aus wenigstens einer Schicht eines Kohlenstoffnanoröhrchen-, Graphit- oder Metallpulver-haltigen Materials aufgebaut sein. Insbesondere in Kombination mit einem Trägermaterial auf Basis von Polyurethan kann ein solches Sensorsystem hervorragend in ebenfalls aus Polyurethan hergestellten Molchscheiben integriert werden. Im Extremfall kann eine solche Molchscheibe komplett aus einem Sensor bestehen. Vorzugsweise sind jedoch in einer Molchscheibe ein oder zwei Schichten von Elektroden eingefasst, so dass diese von den in den Rohrleitungen herrschenden Umwelteinflüssen weniger angreifbar sind.

Methoden, die auf Messung der elektrischen Kapazität beruhen, sind wie beschrieben sehr energieeffizient und es treten nur geringe elektrische Verluste im Vergleich zu widerstandsbasierten Sensorsystem auf. Sie sind widerstandsbasierten Messmethoden für den Betrieb in Rohrleitungen zu bevorzugen.

Vorzugsweise ist der Sensor nicht nur in Längsrichtung dehn- beziehungsweise stauchbar, sondern dergestalt elastisch ausgebildet, dass er in axialer und in Umfangsrichtung biegsam und zwar vorzugsweise reversibel biegsam und somit tordierbar ist.

Die eingangs gestellte Aufgabe wird darüber hinaus durch einen Molch zur Erkennung von Änderungen des freien Innenquerschnitts einer Rohrleitung gelöst, wobei der Molch eine vor- oder nachbeschriebene Molchscheibe aufweist. Die beschriebenen Vorteile kommen ebenfalls dem Molch zu Gute.

Weitere Vorteile und Einzelheiten der Erfindung sind der nachfolgenden Beschreibung von Ausführungsbeispielen zu entnehmen. In den schematischen Abbildungen der Figuren zeigt:
- Fig. 1: einen erfindungsgemäßen Gegenstand in einer Draufsicht,
- Fig. 2: eine Detailansicht eines erfindungsgemäßen Gegenstands nach Fig. 1,
- Fig. 3: einen weiteren erfindungsgemäßen Gegenstand,
- Fig. 4: den Gegenstand nach Fig. 3 in einer Teilansicht in einer Rohrleitung.
- Fig. 5: einen weiteren erfindungsgemäßen Gegenstand in einer Frontansicht,
- Fig. 6: den Gegenstand nach Fig. 5 in einer teilweisen Seitenansicht.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll, werden funktional gleichwirkende Elemente mit identischen Bezugsziffern versehen.

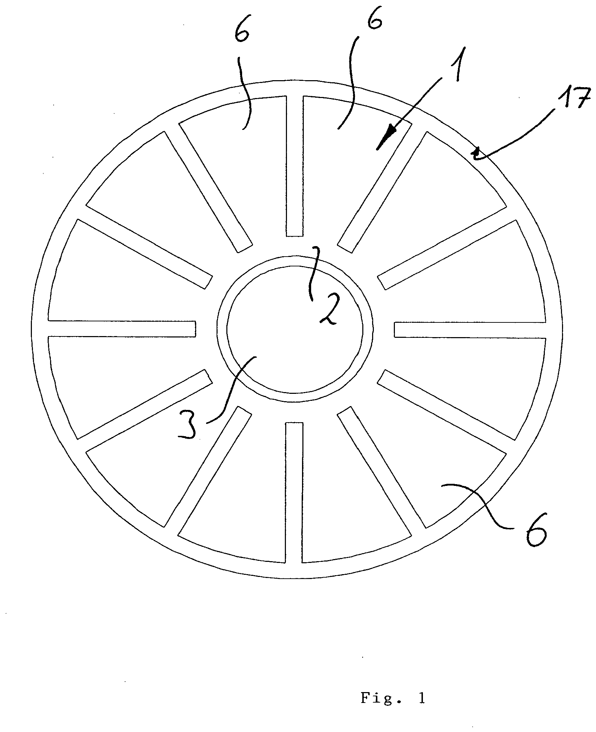

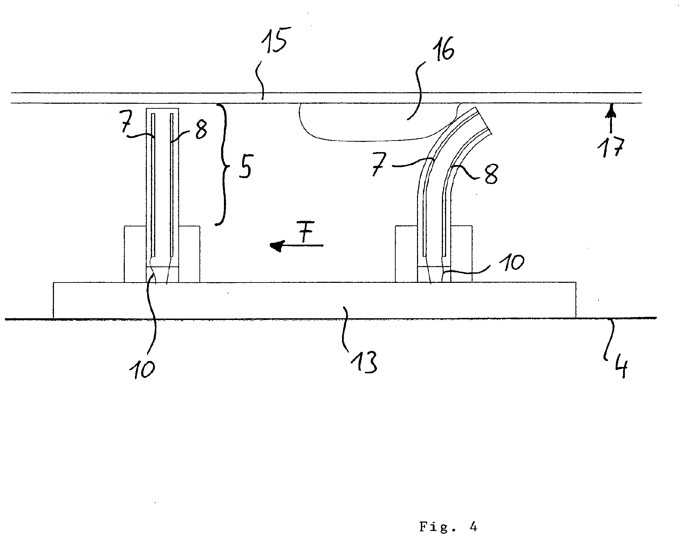

Eine erfindungsgemäße Molchscheibe ist nach Fig. 1 mit einem Scheibenkörper 1 versehen, der einen inneren Befestigungsbereich 2 mit einer zentralen Ausnehmung 3 aufweist. Ausgehend von einer in der Fig. 1 aus der Zeichnungsebene senkrecht herausstehenden und beispielsweise in der Fig. 4 sichtbaren Mittelachse 4 schließt sich weiter nach außen ein eine Mehrzahl von Segmenten 6 umfassender Außenbereich 5 (vgl. Fig. 4) an.

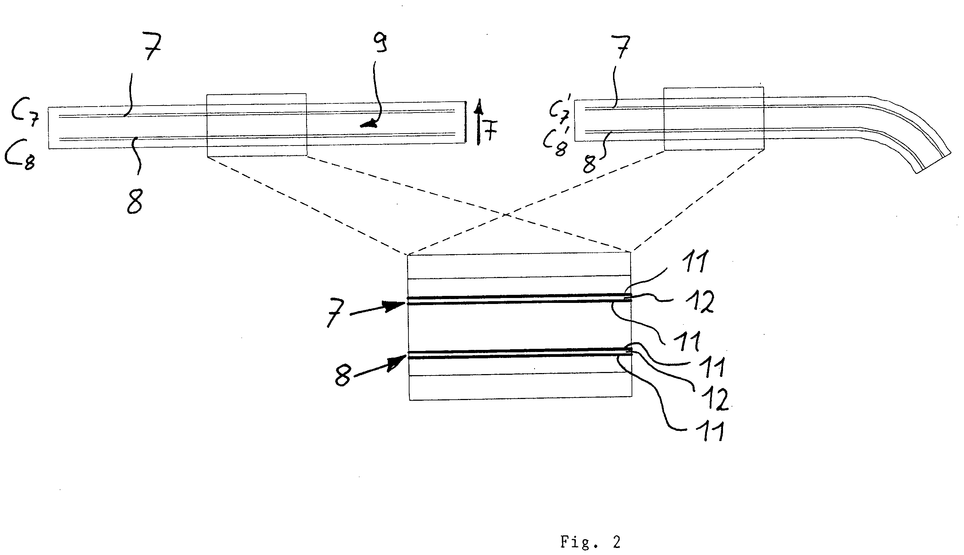

Im Ausführungsbeispiel gemäß Fig. 1 sind in Umfangsrichtung 16 kuchenstückähnliche Segmente 6 vorhanden. Jedes Segment 6 weist zwei in axialer Richtung hintereinander angeordnete Sensoren 7 und 8 auf, die von dem Polyurethan 9 des Außenbereichs 7 eingefasst sind. Sowohl der Sensor 7 wie auch der Sensor 8 umfassen biegsame bzw. flexible Elektroden 11, die ein Dielektrikum 12 auf Basis eines Polyurethans einfassen. Im Falle einer strukturellen Unregelmäßigkeit wird die Molchscheibe verformt, wie dies im oberen rechten Teil der Fig. 2 zu erkennen ist. Hierdurch erfährt der in Fahrtrichtung F vordere Sensor 7 (vgl. Fig. 4) eine Dehnung, die zu einer Vergrößerung seiner Kapazität führt, während der in Fahrtrichtung F befindliche hintere Sensor eine Stauchung und eine hiermit einhergehende Verringerung seiner Kapazität erfährt. Entsprechend ist die Kapazität C₇' > C₇, die Kapazität C₈' < C₈. Die axiale Richtung entspricht mit oder entgegen der Fahrtrichtung F.

Durch die Differenzmessung der Kapazitäten der beiden Sensoren 7 und 8 kann ein temperaturunbeinflusster Änderungswert, der proportional zur Formänderung ist, erlangt werden. Dieser kann entweder analytisch zu einer Formänderung der Elektroden errechnet und entsprechend eine Auskunft über die Verformung der Molchscheibe geben. Er kann alternativ auch über einen Datenbankabgleich und in der Datenbank abgelegte empirische Werte einer Verformung der Molchscheibe angenähert werden und insofern eine Aussage über deren Verformung machen.

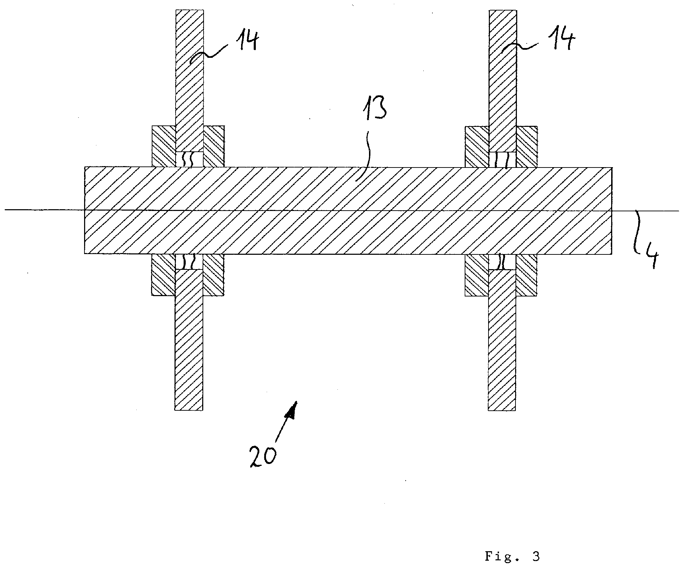

Ein erfindungsgemäßer Molch 20, versehen mit zwei als Gouginglates ausgestatteten Molchscheiben ist der Fig. 3 zu entnehmen. Dort sind auf einem Molchkörper 13 befestigte Molchscheiben 14 befestigt, die den vorbeschriebenen Molchscheiben entsprechen. Die Erfassung der Kapazitätsänderungen erfolgt innerhalb des zumindest in Teilen hohlen Molchkörpers. Ergänzend oder alternativ könnten Teile der Elektronik zumindest teilweise auch in der Molchscheibe angeordnet werden. Innerhalb des Molchkörpers befinden sich ebenfalls Einheiten zur Erfassung der Kapazitätsänderungen der Sensoren sowie dazugehörige Speichereinheiten. Entsprechend sind die Sensoren über Kabel 10 mit der Mess- bzw. Erfassungseinheit verbunden. Die abgespeicherten Werte können nach dem Lauf dann über entsprechende Schnittstellen einer Auswerteeinheit zugeführt werden beziehungsweise in einer entsprechenden Auswerteeinheit innerhalb des Molchkörpers bereits teilweise oder vollständig vor- oder endausgewertet werden. Über dazugehörige weitere Sensoren, die die Lage des Molchs in der xy-Ebene sowie in z-Richtung, das heißt axialer Richtung entlang der Längsachse 4 erfassen, können strukturelle Unregelmäßigkeiten 16 an einer Innenseite 17 einer Rohrleitung 15 (vgl. Fig. 4) lokalisiert werden. Entsprechend nachfolgende Reinigungs- und Inspektionsläufe von Molchen können gezielter durchgeführt werden.

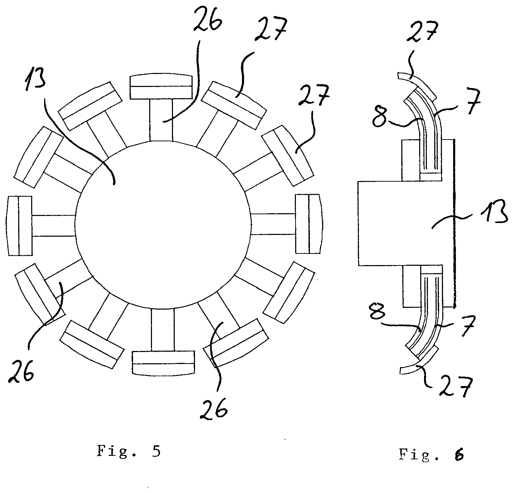

Ein weiterer erfindungsgemäßer Gegenstand gemäß Fig. 5 und 6 weist eine Vielzahl von elastischen Kunststoffelementen 26 auf, die zwischen einem Molchkörper 13 und weiteren Molchteilen 27 in Form von Abtastkappen eine Verbindung herstellen. Jedes Kunststoffelement 26 weist innenseitig zwei elektromechanische Wandler 7 und 8 auf, die eine Information über die Krümmung des Kunststoffelements 26 liefern, welcher von einer zugehörigen Auswerteelektronik ausgewertet werden kann.

## Patentansprüche

1. Molch zur Inspektion und/oder Reinigung von Rohrleitungen, die insbesondere Öl, Gas oder Wasser transportieren, wobei der Molch wenigstens ein biegsames Kunststoffelement (26) aufweist, welches an einem vorzugsweise als Molchkörper (13) ausgebildeten Molchelement gehalten ist, wobei das Kunststoffelement (26) von dem Molchelement aus betrachtet zumindest einen sich in Längsrichtung des Kunststoffelements erstreckenden elektromechanischen Wandler zur Erkennung und/oder Ausübung einer Formänderung des Kunststoffelements (26) aufweist, wobei der Wandler ein von Elektroden (11) eingefasstes Dielektrikum (12) aufweist, wobei das Kunststoffelement (26) überwiegend aus Polyurethan ausgebildet ist und das Dielektrikum (12) ein Polyurethan umfasst.

2. Molch nach Anspruch 1, **dadurch gekennzeichnet, dass** das Kunststoffelelement (26) das Molchelement mit einem weiteren Molchteil verbindet.

3. Molch nach einem der vorherigen Ansprüche, **dadurch gekennzeichnet, dass** eine Mehrzahl von Wandlern in und/oder an dem Kunststoffelement (26) angeordnet ist.

4. Molch nach einem der vorherigen Ansprüche, **dadurch gekennzeichnet, dass** der Wandler zur Erzeugung einer Kraft quer zu seiner Längserstreckung ausgebildet ist, um insbesondere eine Relativposition des Molchelements (26) zum Molchteil zu ändern.

5. Molch nach Anspruch 4, **dadurch gekennzeichnet, dass** der Wandler zur Verstärkung einer von dem Molch auf eine Innenwand der Rohrleitung ausübbaren Kraft ausgebildet ist.

6. Molch nach einem der vorherigen Ansprüche, **dadurch gekennzeichnet, dass** der Wandler als Sensor (7, 8) ausgebildet ist.

7. Molch nach einem der vorherigen Ansprüche, **dadurch gekennzeichnet, dass** das Kunststoffelement (26) elastisch ist und der Wandler dergestalt biegsam ausgebildet ist, dass er Formänderungen des Kunststoffelements mit vollziehen kann.

8. Molch nach einem der vorherigen Ansprüche, **dadurch gekennzeichnet, dass** der Wandler von einem Körper aus Polyurethan (9) eingefasst ist.

9. Molch nach einem der vorherigen Ansprüche, **dadurch gekennzeichnet, dass** eine Schicht des Wandlers zumindest teilweise auf Basis eines Ruß- und/oder Bariumtitanat-haltigen Elastomers ausgebildet ist.

10. Molch nach einem der vorherigen Ansprüche, **dadurch gekennzeichnet, dass** eine Elektrode (11) des Wandlers zumindest teilweise auf Basis eines Kohlenstoffnanoröhrchen-, Graphit-, Ruß- oder Metallpulver-haltigen Materials ausgebildet ist.

11. Molch nach einem der vorherigen Ansprüche, **dadurch gekennzeichnet, dass** der Wandler dergestalt tordierbar ist, dass er in axialer und in Umfangsrichtung biegsam ist.

12. Molchscheibe für einen in einer Rohrleitung (15) verwendbaren Molch (20) und zur Erkennung von Änderungen des freien Innenquerschnitts der Rohrleitung (15), umfassend einen Scheibenkörper (1) mit einem inneren Befestigungsbereich (2) zur Festlegung der Molchscheibe (14) an einem Molchkörper (13) sowie einen bezüglich einer Mittelachse (4) sich weiter nach außen an den Befestigungsbereich (2) anschließenden Außenbereich (5), der wenigstens teilweise in Kontakt mit einer Innenseite (17) der Rohrleitung (15) gelangen kann, wobei zumindest der elastische Außenbereich (7) wenigstens einen elektromechanischen Wandler als Sensor (7, 8) zur Detektion der Änderungen aufweist, wobei der Sensor (7, 8) ein von Elektroden (11) eingefasstes Dielektrikum (12) aufweist, wobei das Dielektrikum (12) ein Polyurethan umfasst und der Sensor von einem Scheibenkörper (1) aus Polyurethan (9) eingefasst ist.

13. Molchscheibe nach Anspruch 12, **dadurch gekennzeichnet, dass** der Sensor (7, 8) dergestalt biegsam ausgebildet ist, dass er durch die Änderungen verursachte Formänderungen der Molchscheibe (14) mitvollziehen kann.

14. Molchscheibe nach Anspruch 12 oder 13, **dadurch gekennzeichnet, dass** der Scheibenkörper (1) in axialer Richtung betrachtet zumindest zwei voneinander beabstandete Sensoren (7, 8) aufweist.

15. Molchscheibe nach einem der vorherigen Ansprüche 12 bis 14, **dadurch gekennzeichnet, dass** der Scheibenkörper (1) in Umfangsrichtung eine Mehrzahl von voneinander getrennten Segmenten (6) aufweist.

16. Molchscheibe nach Anspruch 15, **dadurch gekennzeichnet, dass** der Scheibenkörper (1) pro Segment (6) zumindest einen Sensor aufweist.

17. Molchscheibe nach einem der vorherigen Ansprüche 12 bis 16, **dadurch gekennzeichnet, dass** der Scheibenkörper (1) in radialer Richtung eine Mehrzahl von (7, 8) zumindest teilweise nacheinander angeordneten Sensoren aufweist.

18. Molchscheibe nach einem der Ansprüche 12 bis 17, **dadurch gekennzeichnet, dass** das Dielektrikum des Sensors (7,8) leitfähige oder hoch-polarisierende organische oder anorganische Füllstoffe, insb. Bariumtitanat, aufweist.

19. Molchscheibe nach einem der vorherigen Ansprüche 12 bis 18, **dadurch gekennzeichnet, dass** eine Elektrode (11) des Sensors (7, 8) zumindest teilweise aus wenigstens einer Schicht eines Ruß-haltigen Elastomers ausgebildet ist.

20. Molchscheibe nach einem der Ansprüche 12 bis 19, **dadurch gekennzeichnet, dass** eine Elektrode (11) des Sensors (7, 8) zumindest teilweise aus wenigstens einer Schicht eines Kohlenstoffnanoröhrchen-, Graphit- oder Metallpulver-haltigen Materials ausgebildet ist.

21. Molchscheibe nach einem der vorherigen Ansprüche 12 bis 20, **dadurch gekennzeichnet, dass** der Sensor (7, 8) dergestalt tordierbar ist, dass er in axialer und in Umfangsrichtung biegsam ist.

22. Molchscheibe nach einem der vorherigen Ansprüche 12 bis 21, **gekennzeichnet durch** einen Kantenschutz.

23. Molch zur Erkennung von Änderungen des freien Innenquerschnitts einer Rohrleitung (15), **gekennzeichnet durch** eine Molchscheibe (14) nach einem der vorherigen Ansprüche 12 bis 22.

## Claims

1. Pig for inspecting and/or cleaning pipelines which transport in particular oil, gas or water, wherein the pig comprises at least one flexible plastics element (26) which is held on a pig element that is preferably formed as a pig body (13), wherein the plastics element (26) has, when viewed from the pig element, at least one electromechanical transducer which extends in the longitudinal direction of the plastics element for identifying and/or carrying out a change in the shape of the plastics element (26), wherein the transducer has a dielectric (12) enclosed by electrodes (11), wherein the plastics element (26) is predominantly formed of polyurethane, and the dielectric (12) comprises a polyurethane.

2. Pig according to claim 1, **characterised in that** the plastics element (26) connects the pig element to a further pig part.

3. Pig according to either of the preceding claims, **characterised in that** a plurality of transducers is arranged in and/or on the plastics element (26).

4. Pig according to any of the preceding claims, **characterised in that** the transducer is designed to generate a force transversely to the longitudinal extension of said transducer in order to change in particular a relative position of the pig element (26) with respect to the pig part.

5. Pig according to claim 4, **characterised in that** the transducer is designed to amplify a force that can be exercised by the pig on an inner wall of the pipeline.

6. Pig according to any of the preceding claims, **characterised in that** the transducer is designed as a sensor (7, 8).

7. Pig according to any of the preceding claims, **characterised in that** the plastics element (26) is resilient and the transducer is flexibly designed in such a way that it can follow changes in the shape of the plastics element.

8. Pig according to any of the preceding claims, **characterised in that** the transducer is enclosed by a body consisting of polyurethane (9).

9. Pig according to any of the preceding claims, **characterised in that** one layer of the transducer is formed at least in part on the basis of an elastomer containing carbon black and/or barium titanate.

10. Pig according to any of the preceding claims, **characterised in that** one electrode (11) of the transducer is formed at least in part on the basis of a material containing carbon nanotubes, graphite, carbon black or metal powder.

11. Pig according to any of the preceding claims, **characterised in that** the transducer can be twisted such that it is axially and circumferentially flexible.

12. Pig disc for a pig (20) that can be used in a pipeline (15), and for identifying changes in the free internal cross section of the pipeline (15), comprising a disc body (1) having an internal fastening region (2) for securing the pig disc (14) to a pig body (13), and an outer region (5) that adjoins the fastening region (2) further towards the outside relative to a central axis (4), which outer region can come into contact at least in part with an internal side (17) of the pipeline (15), wherein at least the resilient outer region (7) has at least one electromechanical transducer as a sensor (7, 8) for detecting changes, wherein the sensor (7, 8) has a dielectric (12) enclosed by electrodes (11), wherein the dielectric (12) comprises a polyurethane, and the sensor is enclosed by a disc body (1) consisting of polyurethane (9).

13. Pig disc according to claim 12, **characterised in that** the sensor (7, 8) is flexibly designed in such a way that it can follow changes in the shape of the pig disc (14) caused by the changes.

14. Pig disc according to either claim 12 or claim 13, **characterised in that** the disc body (1), when viewed in the axial direction, has at least two sensors (7, 8) that are mutually spaced.

15. Pig disc according to any of the preceding claims 12 to 14, **characterised in that** the disc body (1) has, in the circumferential direction, a plurality of segments (6) that are separated from each other.

16. Pig disc according to claim 15, **characterised in that** the disc body (1) has at least one sensor per segment (6).

17. Pig disc according to any of the preceding claims 12 to 16, **characterised in that** the disc body (1) has, in the radial direction, a plurality of sensors (7, 8) arranged successively at least in part.

18. Pig disc according to any of the preceding claims 12 to 17, **characterised in that** the dielectric of the sensor (7, 8) has conductive or highly polarising organic or inorganic fillers, in particular barium titanate.

19. Pig disc according to any of the preceding claims 12 to 18, **characterised in that** one electrode (11) of the sensor (7, 8) is designed at least in part to consist of at least one layer of an elastomer containing carbon black.

20. Pig disc according to any of the preceding claims 12 to 19, **characterised in that** one electrode (11) of the sensor (7, 8) is designed at least in part to consist of at least one layer of a material containing carbon nanotubes, graphite or metal powder.

21. Pig disc according to any of the preceding claims 12 to 20, **characterised in that** the sensor (7, 8) can be twisted such that it is axially and circumferentially flexible.

22. Pig disc according to any of the preceding claims 12 to 21, **characterised by** an edge protector.

23. Pig for identifying changes in the free internal cross section of a pipeline (15), **characterised by** a pig disc (14) according to any of the preceding claims 12 to 22.

## Revendications

1. Racleur destiné à l'inspection et/ou au nettoyage de canalisations transportant notamment du pétrole, du gaz ou de l'eau, le racleur comportant au moins un élément flexible (26) en matière synthétique qui est maintenu au niveau d'n élément de racleur conçu de préférence comme un corps de racleur (13), l'élément (26) en matière synthétique comportant, vu depuis l'élément de racleur, au moins un transducteur électromécanique s'étendant dans la direction longitudinale de l'élément en matière synthétique et destiné à détecter et/ou exercer un changement de forme de l'élément (26) en matière synthétique, le transducteur comportant un diélectrique (12) entouré d'électrodes (11), l'élément (26) en matière synthétique étant formé principalement de polyuréthane et le diélectrique (12) comprenant un polyuréthane.

2. Racleur selon la revendication 1, **caractérisé en ce que** l'élément(26) en matière synthétique relie l'élément de racleur à une autre partie de racleur.

3. Racleur selon l'une des revendications précédentes, **caractérisé en ce qu'**une pluralité de transducteurs sont disposés dans et/ou sur l'élément (26) en matière synthétique.

4. Racleur selon l'une des revendications précédentes, **caractérisé en ce que** le transducteur est conçu pour générer une force transversalement à son extension longitudinale pour modifier en particulier une position relative de l'élément de racleur (26) par rapport à la partie de racleur.

5. Racleur selon la revendication 4, **caractérisé en ce que** le transducteur est conçu pour amplifier une force pouvant être exercée par le racleur sur une paroi intérieure de la canalisation.

6. Racleur selon l'une des revendications précédentes, **caractérisé en ce que** le transducteur est conçu comme un capteur (7, 8).

7. Racleur selon l'une des revendications précédentes, **caractérisé en ce que** l'élément (26) en matière synthétique est élastique et le transducteur est conçu de manière à être flexible de sorte qu'il peut effectuer des changements de forme de l'élément en matière synthétique.

8. Racleur selon l'une des revendications précédentes, **caractérisé en ce que** le transducteur est entouré d'un corps en polyuréthane (9).

9. Racleur selon l'une des revendications précédentes, **caractérisé en ce qu'**une couche du transducteur est au moins partiellement à base d'un élastomère contenant du noir de carbone et/ou du titanate de baryum.

10. Racleur selon l'une des revendications précédentes, **caractérisé en ce qu'**une électrode (11) du transducteur est au moins partiellement à base d'une matière contenant des nanotubes de carbone, du graphite, du noir de carbone ou une poudre métallique.

11. Racleur selon l'une des revendications précédentes, **caractérisé en ce que** le transducteur est susceptible d'être torsadé de manière à être flexible dans la direction axiale et dans la direction circonférentielle.

12. Disque de racleur destiné à un racleur (20), pouvant être utilisé dans une canalisation (15), et destiné à détecter des variations de la section transversale intérieure libre de la canalisation (15), le disque de racleur comprenant un corps de disque (1) pourvu d'une région de fixation intérieure (2) destinée à fixer le disque de racleur (14) à un corps de racleur (13) et d'une région extérieure (5) qui se raccorde plus vers l'extérieur à la région de fixation (2) par rapport à un axe central (4) et qui peut venir au moins partiellement en contact avec un côté intérieur (17) de la canalisation (15), au moins la région extérieure élastique (7) comportant au moins un transducteur électromécanique servant de capteur (7, 8) pour détecter les variations, le capteur (7, 8) comportant un diélectrique (12) entouré d'électrodes (11), le diélectrique (12) comprenant un polyuréthane et le capteur étant entouré d'un corps de disque (1) en polyuréthane (9).

13. Disque de racleur selon la revendication 12, **caractérisé en ce que** le capteur (7, 8) est conçu de manière à être flexible afin de pouvoir effectuer des changements de forme, provoqués par les variations, du disque de racleur (14).

14. Disque de racleur selon la revendication 12 ou 13, **caractérisé en ce que** le corps de disque (1) comporte, vu dans la direction axiale, au moins deux capteurs (7, 8) espacés l'un de l'autre.

15. Disque de racleur selon l'une des revendications précédentes 12 à 14, **caractérisé en ce que** le corps de disque (1) comporte une pluralité de segments (6), séparés les uns des autres, dans la direction circonférentielle.

16. Disque de racleur selon la revendication 15, **caractérisé en ce que** le corps de disque (1) comporte au moins un capteur par segment (6).

17. Disque de racleur selon l'une des revendications précédentes 12 à 16, **caractérisé en ce que** le corps de disque (1) comporte, dans la direction radiale, une pluralité de capteurs (7, 8) disposés au moins en partie les uns après les autres.

18. Disque de racleur selon l'une des revendications 12 à 17, **caractérisé en ce que** le diélectrique du capteur (7, 8) comporte des charges organiques ou minérales conductrices ou hautement polarisantes, notamment du titanate de baryum.

19. Disque de racleur selon l'une des revendications précédentes 12 à 18, **caractérisé en ce qu'**une électrode (11) du capteur (7, 8) est formée au moins partiellement d'au moins une couche d'un élastomère contenant du noir de carbone.

20. Disque de racleur selon l'une des revendications 12 à 19, **caractérisé en ce qu'**une électrode (11) du capteur (7, 8) est formée au moins partiellement d'au moins une couche d'une matière contenant des nanotubes de carbone, du graphite ou une poudre de métal.

21. Disque de racleur selon l'une des revendications précédentes 12 à 20, **caractérisé en ce que** le capteur (7, 8) peut être torsadé de manière à être flexible dans la direction axiale et dans la direction circonférentielle.

22. Disque de racleur selon l'une des revendications précédentes 12 à 21, **caractérisé par** une protection des bords.

23. Racleur destinés à détecter des variations de la section transversale intérieure libre d'une canalisation (15), **caractérisé par** un disque de racleur (14) selon l'une des revendications précédentes 12 à 22.
